# FASCICULE DE BREVET EUROPEEN

(11) **EP 2 855 184 B1**
(45) Date de publication et mention de la délivrance du brevet: **20.11.2019**
(21) Numéro de dépôt: 13720993.8
(22) Date de dépôt: 12.04.2013
(51) Int. Cl.: B60K 11/04, B60K 1/00

(54) **DISPOSITIF D'ÉTANCHÉITÉ ENTRE DEUX RADIATEURS DE REFROIDISSEMENT IMPLANTÉS SUR UN VÉHICULE**
DICHTUNGSVORRICHTUNG ZWISCHEN ZWEI IN EINEM FAHRZEUG INSTALLIERTEN KÜHLERN
SEALING DEVICE BETWEEN TWO COOLING RADIATORS INSTALLED IN A VEHICLE

(30) Priorité: 31.05.2012 FR 1255059
(43) Date de publication de la demande: 08.04.2015
(73) Titulaire: PSA Automobiles SA, 78300 Poissy (FR)
(72) Inventeur: CHIPAUX, Christian, F-25310 Abbevillers (FR); BERRE, Olivier, F-25490 Fesches Le Chatel (FR); QUARANTA, Bruno, F-25400 Exincourt (FR)
(74) Mandataire: Bourguignon, Eric Pascal Jean
(86) Numéro de dépôt international: PCT/FR2013/050810
(87) Numéro de publication internationale: WO 2013/178894

(56) Documents cités:
- DE-A1- 10 209 237
- FR-A1- 2 838 080
- FR-A1- 2 956 704

## Description

La présente invention se rapporte à un dispositif d'étanchéité entre deux radiateurs de refroidissement implantés sur un véhicule, en particulier sur un véhicule automobile à motorisation hybride.

Une motorisation de véhicule automobile de type « hybride » fait appel à deux stockages d'énergie pour se mouvoir, dont l'une est de nature électrique, et nécessite deux radiateurs de refroidissement de type échangeurs air/eau, par exemple : un premier radiateur de refroidissement pour le moteur thermique et un second radiateur de refroidissement pour les machines électriques du véhicule.

L'implantation obligatoire en façade avant des radiateurs implique une position contiguë, qui limite, du fait de l'encombrement de ces derniers, leur surface d'échange. De plus, un jeu de montage et de fonctionnement est nécessaire entre les deux radiateurs. Si ce jeu n'est pas comblé, il provoque une perte de flux d'air.

On a déjà cherché à améliorer l'étanchéité des radiateurs de refroidissement.

Ainsi, à titre d'exemple, le document FR 2 961 132 décrit un procédé de fabrication d'un module de refroidissement comprenant un groupe moto-ventilateur, un support de groupe moto-ventilateur, et au moins un échangeur de chaleur. Ce procédé comporte une étape de fabrication dudit support par injection bi-matière, une des deux matières formant un joint d'étanchéité monobloc avec le support, le joint assurant l'étanchéité entre le support et le ou les échangeurs. Les matières utilisées pour l'injection bi-matière comprennent un matériau plastique et un caoutchouc, le caoutchouc étant la matière qui réalise le joint d'étanchéité.

Le document DE 102 09 237 A1 décrit un dispositif d'étanchéité entre deux radiateurs de refroidissement implantés sur un véhicule.

Le but de la présente invention est de fournir un dispositif d'étanchéité entre deux radiateurs de refroidissement implantés sur un véhicule, en particulier sur un véhicule automobile à motorisation hybride, qui permette, de plus, d'exploiter sans perte tout le flux d'air disponible en façade avant du véhicule pour les échanges thermiques des radiateurs de refroidissement.

Un autre but de la présente invention est de fournir un tel dispositif d'étanchéité, qui soit de fabrication et de montage faciles, qui soit léger, et qui résiste à des températures élevées.

Pour parvenir à ces buts, la présente invention a pour objet un dispositif d'étanchéité entre deux radiateurs de refroidissement implantés sur un véhicule selon la revendication 1.

Comme décrit plus loin à l'aide des figures, de préférence les deux radiateurs sont disposés côte à côte, et on comprend par « joue » un côté du radiateur considéré.

Selon un mode préféré de réalisation de l'invention, le profilé présente une section transversale en « T », la partie correspondant à la barre transversale du « T » étant fixée sur la joue dudit premier radiateur qui fait face au second radiateur et la partie correspondant à la barre verticale du « T » obstruant l'espace entre les deux radiateurs.

Ce profilé peut être réalisé en matière plastique souple et, de préférence, cette matière plastique souple peut être un élastomère de type éthylène-propylène- diène monomère (« EPDM »).

Ce profilé est avantageusement fixé sur une joue du premier radiateur par collage.

Selon un mode particulier de réalisation de l'invention, des zones de sertissage sont prévues sur la joue du premier radiateur pour garantir la tenue dans le temps du profilé sur la joue de ce dernier.

Ces zones de sertissage peuvent être, par exemple, au nombre de quatre, régulièrement réparties sur la hauteur de la joue dudit premier radiateur.

Selon un mode particulier de réalisation de l'invention également, le véhicule est un véhicule à motorisation hybride et le premier radiateur de refroidissement est le radiateur dit « radiateur basse température » lié aux machines électriques du véhicule.

La présente invention a aussi pour objet un véhicule, en particulier un véhicule automobile à motorisation hybride, comprenant au moins deux radiateurs de refroidissement, et ce véhicule comporte un dispositif d'étanchéité entre les deux radiateurs de refroidissement au moins qui est conforme à celui décrit ci-dessus dans ses grandes lignes.

D'autres buts, avantages et caractéristiques de l'invention apparaîtront dans la description qui suit d'un exemple de réalisation, non limitatif de l'objet et de la portée de la présente demande de brevet, accompagné de dessins dans lesquels :
- la figure 1 est une vue générale, en perspective, d'une façade avant de véhicule hybride équipée de deux radiateurs de refroidissement, à savoir un radiateur basse température et un radiateur haute température,
- la figure 2 est une vue en perspective du seul radiateur basse température équipé du dispositif d'étanchéité selon l'invention, et
- la figure 3 est une vue agrandie de la partie supérieure du radiateur basse température et du dispositif d'étanchéité de la figure 2.

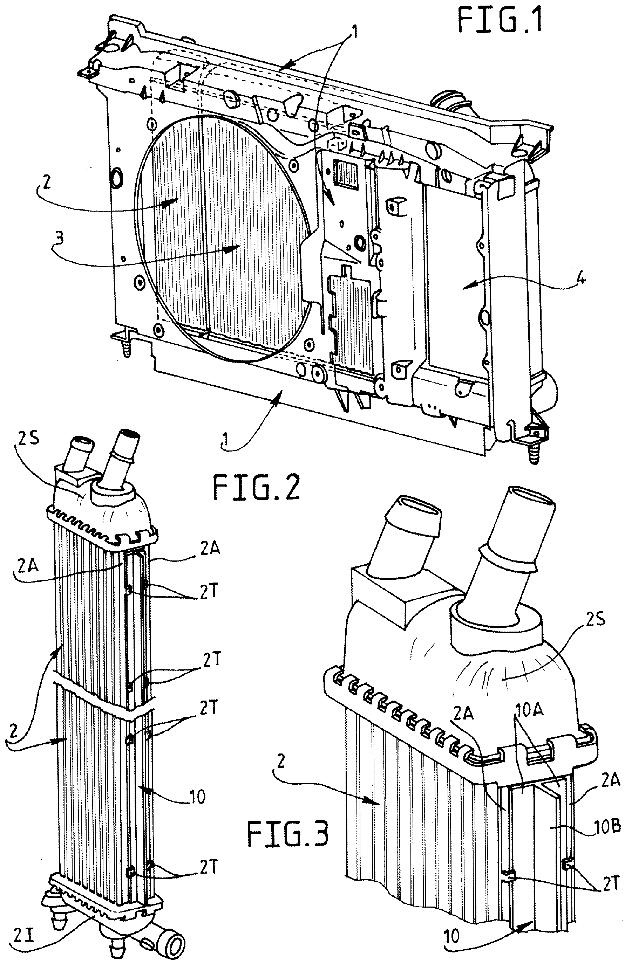

On a représenté sur le dessin de la figure 1 la façade avant, référencée 1, d'un véhicule hybride équipée de deux radiateurs de refroidissement, à savoir un radiateur de refroidissement 3, dit radiateur de haute température, pour le moteur thermique du véhicule et un radiateur de refroidissement 2, dit radiateur de basse température, pour les machines électriques du véhicule.

La référence 4 désigne un radiateur de suralimentation non concerné par la présente invention.

Les deux radiateurs de refroidissement 2,3 sont disposés côte à côte. On comprend par-là que les radiateurs, étant généralement définis sensiblement par une enveloppe parallélépipédique, sont disposés de façon à avoir deux bords latéraux en regard. Ici, les deux radiateurs sont disposés sensiblement selon un même plan médian (représenté verticalement par convention de représentation aux figures).

Selon le principe de la présente invention, pour combler le jeu de montage et de fonctionnement entre les deux radiateurs de refroidissement 2 et 3, il est prévu un dispositif d'étanchéité, de référence générale 10 (figures 2 et 3), qui obstrue ce jeu et renvoie le flux d'air sur les radiateurs échangeurs de chaleur 2 et 3 pour une meilleure efficacité de ces derniers.

Le radiateur de refroidissement basse température 2 est mieux représenté sur les figures 1 et 2. Les références 2S et 2I désignent respectivement les interfaces supérieure et inférieure, d'arrivée et d'écoulement, du radiateur 2.

Ce dispositif d'étanchéité 10 conforme à l'invention présente la forme d'un profilé en matière souple, fixé sur la joue 2A du radiateur de refroidissement de basse température 2 comme montré sur le dessin des figures 2 et 3. Le profilé 10 vient obstruer l'espace entre les deux radiateurs de refroidissement 2 et 3. On comprend donc par « joue » le côté, le bord latéral du radiateur visé, comme représenté à la figure 3 plus précisément.

Ce profilé 10 présente une section transversale en « T », la partie 10A correspondant à la barre transversale du « T » étant fixée par collage sur la joue 2A du radiateur 2 qui fait face au radiateur 3 et la partie 10B, qui correspondant à la barre verticale du « T », venant obstruer l'espace entre les deux radiateurs de refroidissement 2 et 3.

Ce profilé 10 peut avantageusement être réalisé à partir d'un élastomère, par exemple d'un élastomère de type éthylène- propylène- diène monomère (EPDM).

Comme représenté très schématiquement sur la figure 2, des zones de sertissage 2T sont prévues sur la joue 2A du radiateur 2 pour garantir la tenue dans le temps du profilé 10 sur la joue de ce dernier. Ces zones de sertissage 2T peuvent avantageusement être au nombre de quatre, réparties de manière régulière sur la hauteur de la joue 2A du radiateur 2.

Le dispositif d'étanchéité décrit ci-dessus présente de nombreux avantages, parmi lesquels les avantages suivants :
- il représente une solution technique de gestion simplifiée, le dispositif étant solidaire du radiateur basse température livré par le fournisseur,
- il est de mise en place et de montage faciles en ligne de fabrication,
- il est de coût de fabrication relativement faible,
- il permet de rendre optimales les performances aérothermiques des radiateurs,
- il résiste aux hautes températures,
- il est léger, et
- il n'est pas source de panne du véhicule en cas de détérioration.

## Revendications

1. Dispositif d'étanchéité entre deux radiateurs de refroidissement (2, 3) implantés côte à côte sur un véhicule, notamment sur un véhicule automobile à motorisation hybride, **caractérisé en ce que** les deux radiateurs sont disposés sensiblement selon un même plan médian, et ce que ledit dispositif présente la forme d'un profilé (10) en matière souple, fixé sur la joue (2A) d'un premier radiateur de refroidissement (2) et obstruant l'espace entre les deux radiateurs de refroidissement (2, 3).

2. Dispositif selon la revendication 1, **caractérisé en ce que** ledit profilé (10) présente une section en « T », la partie (10A) correspondant à la barre transversale du « T » étant fixée sur la joue (2A) dudit premier radiateur (2) et la partie (10B) correspondant à la barre verticale du « T » obstruant l'espace entre les deux radiateurs de refroidissement (2, 3).

3. Dispositif selon l'une des revendications précédentes, **caractérisé en ce que** ledit profilé (10) est réalisé en matière plastique souple.

4. Dispositif selon la revendication 3, **caractérisé en ce que** ladite matière plastique souple est un élastomère.

5. Dispositif selon la revendication 4, **caractérisé en ce que** ledit élastomère est de type éthylène- propylène- diène monomère (EPDM).

6. Dispositif selon l'une des revendications précédentes, **caractérisé en ce que** ledit profilé (10) est fixé sur la joue (2A) du premier radiateur (2) par collage.

7. Dispositif selon l'une des revendications précédentes, **caractérisé en ce qu'**une pluralité de zones de sertissage (2T) sont prévues sur la joue du premier radiateur de refroidissement (2) pour garantir la tenue dans le temps du profilé (10) sur la joue (2A) de ce dernier.

8. Dispositif selon la revendication 7, **caractérisé en ce que** lesdites zones de sertissage (2T) sont au nombre de quatre.

9. Dispositif selon l'une des revendications précédentes, **caractérisé en ce que** le véhicule est un véhicule à motorisation hybride et **en ce que** ledit premier radiateur de refroidissement (2) est le radiateur basse température lié aux machines électriques du véhicule.

10. Véhicule, en particulier véhicule automobile à motorisation hybride, comprenant au moins deux radiateurs de refroidissement (2, 3) disposés côte à côte, **caractérisé en ce qu'**il comporte un dispositif d'étanchéité (10) entre les deux radiateurs de refroidissement au moins qui est conforme à l'une des revendications précédentes.

## Patentansprüche

1. Dichtungsvorrichtung zwischen zwei Kühlern (2, 3), die Seite an Seite auf einem Fahrzeug, insbesondere auf einem Kraftfahrzeug mit Hybridmotorisierung installiert sind, **dadurch gekennzeichnet, dass** die zwei Kühler im Wesentlichen entlang einer ersten Mittenebene angeordnet sind, und dass die Vorrichtung die Form eines Profils (10) aus biegsamem Material aufweist, das auf der Backe (2A) eines ersten Kühlers (2) befestigt ist und den Raum zwischen den zwei Kühlern (2, 3) versperrt.

2. Vorrichtung nach Anspruch 1, **dadurch gekennzeichnet, dass** das Profil (10) einen "T"-Abschnitt aufweist, wobei der Teil (10A), der der Querleiste des "T" entspricht, auf der Backe (2A) des ersten Kühlers (2) befestigt ist, und der Teil (10B), der der vertikalen Leiste des "T" entspricht den Raum zwischen den zwei Kühlern (2, 3) versperrt.

3. Vorrichtung nach einem der vorstehenden Ansprüche, **dadurch gekennzeichnet, dass** das Profil (10) aus biegsamem Kunststoff hergestellt ist.

4. Vorrichtung nach Anspruch 3, **dadurch gekennzeichnet, dass** das biegsame Kunststoffmaterial ein Elastomer ist.

5. Vorrichtung nach Anspruch 4, **dadurch gekennzeichnet, dass** das Elastomer vom Typ Äthylen-Propylen-Dien-Monomer (EPDM) ist.

6. Vorrichtung nach einem der vorstehenden Ansprüche, **dadurch gekennzeichnet, dass** das Profil (10) auf der Backe (2A) des ersten Kühlers (2) durch Kleben befestigt ist.

7. Vorrichtung nach einem der vorstehenden Ansprüche, **dadurch gekennzeichnet, dass** eine Vielzahl von Falzzonen (2T) auf der Backe des ersten Kühlers (2) vorgesehen ist, um das dauerhafte Halten des Profils (10) auf der Backe (2A) dieses Letzteren zu garantieren.

8. Vorrichtung nach Anspruch 7, **dadurch gekennzeichnet, dass** die Anzahl der Falzzonen (2T) vier beträgt.

9. Vorrichtung nach einem der vorstehenden Ansprüche, **dadurch gekennzeichnet, dass** das Fahrzeug ein Fahrzeug mit Hybridmotorisierung ist, und dass der erste Kühler (2) ein Niedertemperaturkühler ist, der mit den elektrischen Maschinen des Fahrzeugs verbunden ist.

10. Fahrzeug, insbesondere Kraftfahrzeug mit hybrider Motorisierung, das mindestens zwei Kühler (2, 3) umfasst, die Seite an Seite angeordnet sind, **dadurch gekennzeichnet, dass** es eine Dichtungsvorrichtung (10) zwischen den mindestens zwei Kühlern, die einem der vorstehenden Ansprüche entspricht, umfasst.

## Claims

1. A sealing device between two cooling radiators (2, 3) installed side by side in a vehicle, in particular in a hybrid motor vehicle, **characterized in that** the two radiators are disposed substantially along the same median plane, and **in that** the said device has the form of a profile (10) of flexible material, fixed on the cheek (2A) of a first cooling radiator (2) and blocking the space between the two cooling radiators (2, 3).

2. The device according to Claim 1, **characterized in that** the said profile (10) has a "T"-shaped section, the part (10A) corresponding to the crossbar of the "T" being fixed on the cheek (2A) of the said first radiator (2) and the part (10B) corresponding to the vertical bar of the "T" blocking the space between the two cooling radiators (2, 3).

3. The device according to one of the preceding claims, **characterized in that** the said profile (10) is made of flexible plastic material.

4. The device according to Claim 3, **characterized in that** the said flexible plastic material is an elastomer.

5. The device according to Claim 4, **characterized in that** the said elastomer is of the ethylene propylene diene monomer (EPDM) type.

6. The device according to one of the preceding claims, **characterized in that** the said profile (10) is fixed on the cheek (2A) of the first radiator (2) by bonding.

7. The device according to one of the preceding claims, **characterized in that** a plurality of crimping zones (2T) are provided on the cheek of the first cooling radiator (2) to guarantee the holding over time of the profile (10) on the cheek (2A) thereof.

8. The device according to Claim 7, **characterized in that** the said crimping zones (2T) are four in number.

9. The device according to one of the preceding claims, **characterized in that** the vehicle is a hybrid motor vehicle and **in that** the said first cooling radiator (2) is the low temperature radiator linked to the electric machines of the vehicle.

10. A vehicle, in particular a hybrid motor vehicle, including at least two cooling radiators (2, 3) disposed side by side, **characterized in that** it comprises a sealing device (10) between the two cooling radiators at least which is according to one of the preceding claims.
